# EUROPÄISCHE PATENTSCHRIFT

(11) **EP 0 687 378 B1**
(45) Veröffentlichungstag und Bekanntmachung des Hinweises auf die Patenterteilung: **13.11.1996**
(21) Anmeldenummer: 94907563.4
(22) Anmeldetag: 11.02.1994
(51) Int. Cl.: H01B 11/00, H05K 9/00

(54) **ELEKTROMAGNETISCH ABGESCHIRMTES KABEL BZW. LEITUNG**
ELECTROMAGNETICALLY SHIELDED CABLE OR LINE
CABLE OU LIGNE A BLINDAGE ELECTROMAGNETIQUE

(30) Priorität: 04.03.1993 DE 9303371 U
(43) Veröffentlichungstag der Anmeldung: 20.12.1995
(73) Patentinhaber: ABB Daimler-Benz Transportation (Deutschland) GmbH, 16761 Hennigsdorf (DE)
(72) Erfinder: FREUDENTHALER, Kurt, D-12167 Berlin (DE); FELDHUSEN, Jörg, D-41352 Kleinenbroich/Korsenbroich (DE); VON DER HEYDT, Bernd, D-14195 Berlin (DE)
(86) Internationale Anmeldenummer: EP9400410
(87) Internationale Veröffentlichungsnummer: WO9420968

(56) Entgegenhaltungen:
- EP-A- 0 144 146
- DE-A- 1 914 641
- DE-C- 375 377
- US-A- 1 370 731
- US-A- 2 585 054
- US-A- 4 640 980
- US-A- 4 786 757
- IBM Technical Disclosure Bulletin, Band 23, Nr. 4, September 1980, D.A. Schoonover, "SHIELDING FOR SIGNAL WIRE BREAKOUTS"
- IBM Technical Disclosure Bulletin, Band 23, Nr. 4, September 1980, D.A. Schoonover, "SHIELDING FOR SIGNAL WIRE BREAKOUTS", page 1615-1617

## Beschreibung

Die Neuerung betrifft ein Kabel bzw. eine Leitung mit Einzeladern innerhalb eines metallische Geflechtes, wie es im Oberbegriff des Anspruches 1 näher definiert ist.

Ein solches Kabel, mit einem Bündel von isolierten Einzeladern innerhalb eines metallischen Geflechtes, das als elektromagnetisch abschirmende Summenumhüllung dient und von einem mechanisch schützenden, isolierenden Kabel- bzw. Leitungsmantel umgeben ist, ist z.B. als Signalkabel für Computersysteme aus der Druckschrift IBM Technical Disclosure Bulletin Vol.23, No.4,Sept. 1980, S. 1615-1617 bekannt. Für Anschlußzwecke müssen dort umständlich die entmantelten sowie von der Summenumhüllung befreiten und dabei unabgeschirmt heraustretenden Einzeladern jeweils mit zusätzlichen abschirmenden Umhüllungen aus metallischem Geflecht versehen werden. Für diese zusätzlichen Abschirmungsenden ist eine elektrisch leitende Kontaktierung mit der abschirmenden Summenumhüllung vorzusehen. Dies erfolgt dort über besondere kontaktgebende Leitgeflechte durch spezielle mechanische Klemmen, die als peripher wirsame Druckmittel punktuell wirksam werden, sowie anschließendes Umhüllen mit isolierendem Material mit Schrumpfwirkung. Die hierbei zu treffenden Maßnahmen sind umständlich, zeitraubend und lohnintensiv. Die Verbindungen wirken unförmig und optisch unschön.
Es sind bereits Hochspannungskabel bekannt, bei denen die isolierten Einzeladern jeweils auch eine metallische Primärumhüllung aufweisen und sämtliche Primärumhüllungen zusätzlich von einer unmittelbar darauf aufgebrachten gemeinsamen metallischen Summenumhüllung umgeben sind (US-PS 1 370 731).

Es sind dort Kontaktierungen der Primärumhüllungen untereinander und/oder über die Summenumhüllung vorgesehen, die ihrerseits von einer Schutzumhüllung in Form eines Kabel- bzw. Leitungsmantels umgeben ist. Als Umhüllungen dienen Bandwickel aus isolierendem Papier mit metallischen Lamellenbelägen, die einerseits elektrostatische Verluste und Beanspruchungen mindern, andererseits die bei hoher Übertragungsleistung anfallende Wärme ableiten und auch Feuchtigkeit durchlassen sollen. Solche Umhüllungen sind für elektromagnetische Abschirmungen bei Kabeln, die in EMC-verseuchten Räumen eingesetzt werden sollen, nicht geeignet.
Auch andere Ausführungen von Hochspannungskabeln mit ähnlichem Aufbau (z.B. DE-OS 1 914 641) sind ausschließlich für inneren Feldstärkeausgleich und genügendem Luft- und Feuchtigkeitsdurchsatz konzipiert und stellen kein Vorbild dar, wie ein wirksamer elektromagnetischer Schutz aufgebaut sein sollte.
Für Hf-Telephoniekabel ist es bekannt, die einzelnen Adern mit geschlossenen metallischen Primärumhüllungen gegen
Übersprechen abzuschirmen und das Kabel als Ganzes mit einem Blei-Schutzmantel zu umgeben (z.B.DE-PS 37 53 377).

Auf dem angesprochenen Gebiet der EMC-Abschirmung sind somit bei solchen Leitungen oder Kabel entweder mehrere Einzeladern mit einer gemeinsamen elektromagnetischen Abschirmung (Blechband oder metallisches Geflecht) versehen oder aber die Einzeladern sind einzeln abgeschirmt.

Bei der Verschaltung solcher Leitungen ist es nachteilig, wenn jede Abschirmung der Adern einzeln an Masse gelegt werden muß oder die Adern in abgeschirmtem Zustand oft nicht bis dicht zur elektrischen Anschlußstelle weitergeführt werden können, was die Abschirmwirkung verringert. Die bislang dagegen zu treffenden Maßnahmen waren insgesamt unbefriedigend.

Aufgabe der Neuerung ist es, dies zu verbessern. Die Schirme der einzelnen Adern sollen einfach bis dicht an die elektrischen Anschlüsse geführt werden können und die Masseanbindung allgemein erleichtert werden.
Diese Aufgabe wird gemäß den kennzeichnenden Merkmalen des Anspruches 1 gelöst. Vorteilhafte Ausgestaltungen sind den Unteransprüchen entnehmbar.

Anhand der schematischen Zeichnungsfiguren wird die Neuerung im nachstehenden näher erläutert.
Es zeigen:
Fig. 1 Aufbau eines neuerungsgemäß abgeschirmten Kabels
Fig. 2 Querschnitt des Kabels nach Fig. 1
Fig. 3 ein verlegtes, geschaltetes EMV-Schirmkabel

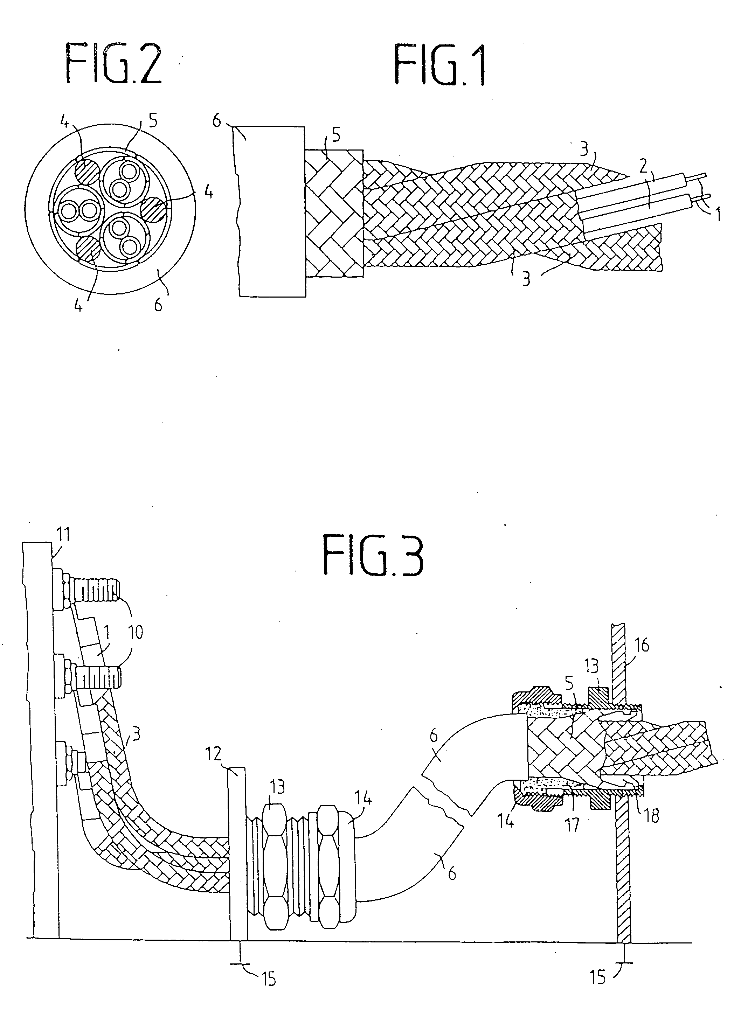

Nach Fig. 1 weist das Kabel Adern auf, die z.B. aus Litzen bestehen und mit einer Isolierung 2 versehen sind. Die Adern sind im vorliegenden Fall paarweise mit einer metallischen Primärabschirmung 3 umgeben. Drei solcher verdrillter Adernpaare, jeweils mit separater Primärabschirmung 3 sind zusammen mit Füllbeilagen 4 (vorzugsweise auch metallisch) von einer Summenumhüllung 5 umgeben. Das ganze befindet sich in einer Schutzumhüllung 6 aus isolierendem Material (z.B. Kunststoff), die --über das Material-- definierte Radialkräfte auf den Summenschirm 5 ausübt und eine sichere Kontaktierung aller Abschirmungen, d.h. der Primärabschirmungen 3 untereinander und mit dem Summenschirm 5 sicherstellt.

Fig. 2 zeigt den Aufbau im Querschnitt.

In Fig. 3 ist ein elektrisches Gerät 11 mit einem solchen Kabel angeschlossen. Es zeigt Einzeladern 1, deren Primärabschirmungen 3 bis dicht an die elektrischen Schraubanschlüsse 10 herangeführt sind. Die Adern verlaufen zur metallischen Stützdurchführung 12, in die eine metallische Schraubmuffe 13 eingeschraubt ist.

Das hindurchgeführte Kabel ist in diesem Bereich von der Schutzumhüllung 6 befreit und durch Klemmwirkung der Schraubmuffenmutter 14 erfolgt eine Kontaktgabe über Summenumhüllung 5, Schraubmuffe 13, Stützdurchführung 12 zum Masseanschluß 15. Ein Querschnitt durch eine solche Schraubmuffe 13 ist in der daneben dargestellten gleichartig ausgeführten Wanddurchführung 16 dargestellt. Mit 17 ist darin ein elastisches Innenteil bezeichnet, das beim Aufschrauben der Schraubmuffenmutter 14 das durchgeführte Kabel mit dem an dieser Stelle aufgefaserten Summenumhüllung 5 gegen einen rohrartigen metallischen Innenkonus 18 der Schraubmuffe 13 preßt und so die elektrische Verbindung zum Masseanschluß 15 herstellt.
Durch die Neuerung ist eine sichere Verbindung nur eines Masseanschlusses über die Summenumhüllung 5 bis zu den einzelnen Primärumhüllungen 3 herstellbar. Die Anzahl der sonst nötigen Übergänge zwischen Abschirmung und Masse wird so reduziert. Damit ergeben sich erhebliche Vorteile bei Montage- und Materialkosten sowie beim Platzbedarf und durch Gewichtsersparnis (weniger Schraubmuffen, Gewindebohrungen und Auflagepunkte).

## Patentansprüche

1. Kabel bzw. Leitung mit isolierten Einzeladern innerhalb eines metallischen Geflechtes, das als elektromagnetisch abschirmende Summenumhüllung von einem mechanisch schützenden, isolierenden Kabel- bzw. Leitungsmantel umgeben ist, wobei für Anschlußzwecke von der Summenumhüllung befreite und dabei unabgeschirmt heraustretende Einzeladern jeweils mit zusätzlichen abschirmenden Umhüllungen aus metallischem Geflecht zu versehen sind, für die eine elektrisch leitende Kontaktierung mit der abschirmenden Summenumhüllung durch peripher wirksame Mittel sowie anschließendes Umhüllen mit isolierendem Material mit Schrumpfwirkung erfolgt,
**dadurch gekennzeichnet,**
daß sowohl die abschirmende Summenumhüllung (5) als auch die zusätzlichen, als Primärumhüllungen (3) bezeichneten Abschirmungen der Einzeladern (2) sich kontinuierlich über die gesamte Kabel- bzw. Leitungslänge erstrecken und daß für den schützenden, äußeren Kabel- bzw. Leitungsmantel (6) ein isolierendes Material mit Schrumpfwirkung Verwendung findet, mit dem --ohne zusätzliche Mittel-- bereits über die beim Schrumpfen auftretenden gleichmäßigen radialen Druckkräfte eine dauerhafte, über die gesamte Kabel- bzw. Leitungslänge sichere Kontaktierung zwischen den zusätzlichen Primärumhüllungen (3) und der abschirmenden Summenumhüllung (5) erzielbar ist.

2. Kabel bzw. Leitung nach Anspruch 1
**dadurch gekennzeichnet,**
daß für eine Gesamtabschirmung ein Anschluß an Masse nur an einer der Abschirmungen, Primärumhüllung (3) oder Summenumhüllung (5), vorzugsweise Summenumhüllung (5) vorzusehen ist.

3. Kabel bzw. Leitung nach Anspruch 1 oder 2,
**dadurch gekennzeichnet,**
daß für einen gemeinsamen Masseanschluß (15) an metallischen Stütz- oder Wanddurchführungen (12,16) eine metallische Schraubmuffe (13) vorgesehen ist, die das hindurchgeführte und in diesem Bereich von der Schutzumhüllung (6) befreite Kabel an der Summenumhüllung (5) klemmend kontaktiert.

## Claims

1. Cable or line with insulated individual wires within a metallic mesh, which is surrounded by a mechanically protective insulating cable casing or line casing as an electromagnetically screening overall sheathing, wherein individual wires freed from the overall casing for connection purposes and thus issuing unscreened are to be provided each time with additional screening sheathings of metallic mesh, for which an electrically conductive contact-making with the screening overall sheathing is effected by peripherally effective means as well as subsequent enclosure by insulating material, characterised thereby that both the screening overall sheathing (5) and the additional screenings, which are denoted as primary sheathings (3), of the individual wires (2) extend continuously over the entire cable or line length and that an insulating material with shrinkage effect finds use for the protective outer cable casing or line casing (6), by which and without additional means a permanent contact-making, which is reliable over the entire cable or line length, between the additional primary sheathings (3) and the screening overall sheathing (5) is attainable already by way of the uniform radial pressure forces arising during the shrinkage.

2. Cable or line according to claim 1, characterised thereby that for a total screening a connection to ground is to be provided only at one of the screenings, namely primary sheathing (3) or overall sheathing (5), preferably the overall sheathing (5).

3. Cable or line according to claim 1 or 2, characterised thereby that for a common ground connection (15) there is provided at metallic or wall passages (12, 16) a metallic screw sleeve (13) which contacts the cable, which is guided therethrough and freed from the protective sheathing (6) in this region, with the overall sheathing (5) in clamping manner.

## Revendications

1. Câble ou ligne comportant des conducteurs individuels isolés à l'intérieur d'une tresse métallique qui est entourée en tant qu'enveloppe générale de blindage électromagnétique par un manteau de câble ou de ligne de protection mécanique et d'isolation, dans lequel/laquelle des conducteurs individuels qui, à des fins de raccordement sont libérés de l'enveloppe générale et qui sortent de façon non blindée, sont pourvus respectivement d'enveloppes supplémentaires de blindage constituées par une tresse métallique, pour lesquelles s'effectue un contact électriquement conducteur avec l'enveloppe générale de blindage par des moyens agissant à la périphérie, ainsi qu'un enveloppement ultérieur par un matériau isolant à effet de rétraction, caractérisé(e) en ce que tant l'enveloppe générale de blindage (5) que les blindages supplémentaires, désignés comme enveloppes primaires (3) des conducteurs individuels (2), s'étendent en continu sur toute la longueur du câble ou de la ligne, et en ce que pour le manteau extérieur protecteur (6) du câble ou de la ligne on utilise un matériau isolant à effet de rétraction, grâce auquel un contact durable et sûr dans toute la longueur du câble ou de la ligne entre les enveloppes primaires supplémentaires (3) et l'enveloppe générale de blindage (5) peut être obtenu déjà via les forces de compression radiales régulières apparaissant lors de la rétraction, sans prévoir des moyens supplémentaires.

2. Câble ou ligne selon la revendication 1, caractérisé(e) en ce qu'il est prévu, pour un blindage total, un raccordement à la masse sur un seul des éléments que sont les blindages, les enveloppes primaires (3) ou l'enveloppe générale (5), de préférence sur l'enveloppe générale (5).

3. Câble ou ligne selon l'une ou l'autre des revendications 1 et 2, caractérisé en ce qu'il est prévu, pour un raccordement à la masse commun (15) sur des passages de paroi ou de support métalliques (12, 16) un manchon vissé métallique (13), qui vient en contact avec coincement, au niveau de l'enveloppe générale (5), contre le câble enfilé et libéré dans cette région de l'enveloppe protectrice (6).
